# EUROPÄISCHE PATENTSCHRIFT

(11) **EP 2 468 601 B1**
(45) Veröffentlichungstag und Bekanntmachung des Hinweises auf die Patenterteilung: **14.11.2012**
(21) Anmeldenummer: 11008809.3
(22) Anmeldetag: 05.11.2011
(51) Int. Cl.: B61D 17/22, B60D 5/00

(54) **Mindestens ein zwei gelenkig miteinander verbundene Fahrzeuge umfassendes Gelenkfahrzeug**
At least one articulated vehicle comprising two vehicles connected with an articulated connection
Au moins un véhicule articulé comprenant deux véhicules reliés de manière articulée

(30) Priorität: 24.12.2010 EP 10016082
(43) Veröffentlichungstag der Anmeldung: 27.06.2012
(73) Patentinhaber: Hübner GmbH, 34123 Kassel (DE)
(72) Erfinder: Goebels, André, 34134 Kassel (DE)
(74) Vertreter: Walther, Walther & Hinz GbR

(56) Entgegenhaltungen:
- EP-A1- 0 685 376
- EP-A1- 1 990 563
- WO-A1-97/42045
- DE-A1- 19 802 123

## Beschreibung

Die Erfindung betrifft mindestens ein zwei gelenkig miteinander verbundene Fahrzeuge umfassendes Gelenkfahrzeug, wobei zwei Fahrzeuge auf ihren einander zugewandten Stirnseiten durch mindestens einen Luftführungsbalg verbunden sind.

Ein gelenkfahrzeng mit den im Oberbegriff von Anspruch 1 definierten merkmalen ist aus der EP-A-0 685 376 bekannt.

Gelenkig miteinander verbundene Fahrzeuge als Gelenkfahrzeug sind sowohl aus dem Schienen- als auch aus dem Straßenverkehr bekannt. Aus dem Straßenverkehr sind insofern Gelenkbusse bekannt, wobei die beiden Fahrzeugteile eines solchen Gelenkbusses durch einen Übergang miteinander verbunden sind.

Bei Gelenkfahrzeugen des Schienenverkehrs ist zu unterscheiden zwischen solchen Fahrzeugen, die zwar zur Bildung eines Zuges gelenkig miteinander in Verbindung stehen, wobei allerdings kein Übergang zwischen den beiden Fahrzeugen vorgesehen ist, um ein Hinüberwechseln von Personen des einen Fahrzeugs in das andere Fahrzeug zu ermöglichen. Des Weiteren sind solche Schienenfahrzeuge bekannt, bei denen die einzelnen Fahrzeuge durch Übergänge miteinander verbunden sind. Ein Übergang umfasst eine zwischen den beiden Fahrzeugen angeordnete Übergangsbrücke, die durch einen Balg oder eine Balgeinrichtung wie z. B. einem Doppelbalg, insbesondere in der Form eines Doppelwellenbalges miteinander verbunden sind.

Darüber hinaus ist insbesondere aus dem Schienenverkehr bekannt, im Bereich des Übergangsbalges beabstandet zum Balgdach eine Balgdecke vorzusehen, wobei in dem hierdurch gebildeten Zwischenraum Leitungen zur Luftführung und auch sonstige Versorgungsleitungen verlegt werden. In ähnlicher Weise sind auch die Versorgungsleitungen zwischen den Bälgen einer, z. B. als Doppelwellenbalg ausgebildeten Balgeinrichtung verlegt.

Die Versorgungsleitungen umfassen nicht nur solche zum Transport von Strom oder Druckluft, sondern auch Versorgungsschächte, die als Bälge ausgebildet sind, und die an eine Klimaanlage angeschlossen sind, um die beiden Fahrzeuge mit entsprechender Luft zu versorgen. Insofern weisen die Fahrzeuge stirnseitig Öffnungen auf, an die die entsprechenden Bälge zur Luftführung angeschlossen sind.

Die Herstellung solcher Bälge ist relativ kostenintensiv, da die Bälge als Formteile, beispielsweise aus PU hergestellt sind. Der Kostenaufwand für die Herstellung derartiger Bälge ist insofern im Wesentlichen auch bestimmt durch die Werkzeugkosten.

Die der Erfindung zugrunde liegende Aufgabe besteht demzufolge darin, bei einem Gelenkfahrzeug die Luftführung zwischen den einzelnen Fahrzeugen preiswerter zu gestalten.

Zur Lösung der Aufgabe wird erfindungsgemäß vorgeschlagen, dass der Luftführungsbalg zur Bildung mindestens einer ersten Luftführungskammer mindestens einen sich parallel zur Längsachse erstreckenden Zentralbalg aufweist, wobei der Luftführungsbalg mindestens eine zweite Luftführungskammer aufweist, die als zu einer Seite offener Teilbalg ausgebildet ist, wobei der Teilbalg mit der offenen Seite über die Länge des Zentralbalges mit dem Zentralbalg verbunden ist. Das heißt, es wird ein sich in Längsrichtung erstreckender, mindestens zweikammeriger Luftführungsbalg zur Verfügung gestellt, der aus einem Zentralbalg und mindestens einem Teilbalg ausgebildet ist, wobei der Teilbalg an der einen Seite offen ausgebildet ist, und insofern zur Bildung einer geschlossenen Kammer entsprechend mit dem Zentralbalg verbunden ist. Insbesondere ist vorgesehen, dass der Teilbalg durch einen parallel zur Längsachse getrennten Balg gebildet ist. Das bedeutet, dass der Teilbalg durch beispielsweise mittige Teilung eines Balgs in doppelter Ausfertigung gebildet wird, die beiden Teilbälge als Balghälften an den Zentralbalg angesetzt werden und in Verbindung mit den Seitenwänden des Zentralbalges einen insofern dreikammerigen Luftführungsbalg bilden. Das heißt, dass zur Herstellung von Luftführungsbälgen mit Kammern unterschiedlicher Größe maximal zwei Größen von Zentralbälgen vorgesehen sind, wobei durch einfache Teilung eines solchen Zentralbalges zumindest einer der beiden Teilbälge in einfacher Weise mit einem Zentralbalg verbunden ist. Vorteilhaft ist hierbei insbesondere, wenn der zu bildende Teilbalg durch mittige Teilung entlang der Mittellängsachse eines Zentralbalges geteilt wird, da insofern lediglich eine einzige Werkzeugform notwendig ist, um Luftführungsbälge mit Kammern unterschiedlicher Größe herstellen zu können. Nach einer besonderen Ausführungsform ist insofern vorgesehen, dass der Zentralbalg im Querschnitt viereckig, und hier insbesondere rechteckig ausgebildet ist, sodass sich bei Kombination eines solchen Zentralbalges mit einem oder mehrerer Teilbälge ein viereckiger oder auch rechteckiger Luftführungsbalg ergibt.

Nach einer Variante zu der oben beschriebenen Ausführungsform ist vorgesehen, dass der sich in Längsrichtung zwischen den beiden Fahrzeugen erstreckende Zentralbalg im Querschnitt zylindrisch ausgebildet ist, wobei der Teilbalg durch Trennung eines im Querschnitt zylindrischen Balges parallel zu seiner Längsachse gebildet ist, wobei der zylindrische Balg zur Erstellung des Balges einen kleineren oder größeren Querschnitt aufweist, als der sich zwischen den beiden Fahrzeugen erstreckende Zentralbalg. Hieraus folgt, dass der Zentralbalg einen Querschnitt aufweist, wobei der zur Herstellung des Teilbalges verwendete Balg einen dazu unterschiedlichen Querschnitt aufweist, um den Teilbalg zur Bildung einer weiteren Luftführungskammer beabstandet zum zentralen zylindrischen Balg an dem zylindrischen Balg anzuordnen.

In Bezug auf beide Varianten ist des Weiteren vorgesehen, dass der mindestens eine Teilbalg mit dem Zentralbalg verklebt, vernäht und/oder verschweißt ist. In jedem Fall ist eine luftdichte Verbindung zwischen dem Teilbalg einerseits und dem Zentralbalg andererseits zu gewährleisten. Weiterhin ist vorteilhaft der mindestens eine Teilbalg und der Zentralbalg miteinander verzahnt verbunden, was bedeutet, dass der Teilbalg vollflächig auf dem Zentralbalg im Bereich der Verbindung zwischen dem Zentralbalg und dem Teilbalg aufliegt. Teilbalg und Zentralbalg sind vorteilhaft als Faltenbalg ausgeführt.

Es wurde bereits darauf hingewiesen, dass die beiden gelenkig miteinander verbundenen Fahrzeuge durch einen Übergang mit mindestens einer Übergangsbalgeinrichtung miteinander verbunden sind, wobei der Luftführungsbalg durch die Übergangsbalgeinrichtung gehalten ist. Die Übergangsbalgeinrichtung kann hierbei als Doppelbalg, insbesondere als Doppelwellenbalg ausgebildet sein, wobei der Luftführungsbalg zwischen Innen- und Außenbalg des Doppelbalges geführt ist. Es ist allerdings die Übergangsbalgeinrichtung mit einem Übergangsbalg bekannt, wobei der Übergangsbalg beabstandet am Balgdach eine Balgdecke aufweist, wobei hierbei der Luftführungsbalg zwischen Balgdecke und Balgdach verläuft.

Um eine Relativbewegung der Übergangsbalgeinrichtung relativ zum Luftführungsbalg gewährleisten zu können, ist der Luftführungsbalg an der Übergangsbalgeinrichtung aufgehängt.

Anhand der Zeichnungen wird die Erfindung nachstehend beispielhaft näher erläutert.
- Fig. 1: zeigt zwei gelenkig miteinander verbundene Fahrzeuge, die im Bereich des Daches einen die beiden Fahrzeuge stirnseitig verbindenden Luftführungsbalg aufweisen;
- Fig. 2: zeigt eine Ausführungsform zweier gelenkig miteinander verbundener Fahrzeuge, wobei die beiden durch ein Gelenk oder Kupplung miteinander verbundenen Fahrzeuge durch einen Übergang mit einem Doppelwellenbalg verbunden sind;
- Fig. 3: zeigt den Luftführungsbalg in einer stirnseitigen Ansicht, wobei zur Verdeutlichung der Herstellung der Teilbälge ein parallel zur Mittellängsachse aufgeschnittener Zentralbalg dargestellt ist;
- Fig. 4: zeigt eine Ansicht auf den Luftführungsbalg gemäß der Linie IV-IV aus Fig. 3;
- Fig. 5: zeigt einen Schnitt gemäß der Linie V-V aus Fig. 3.
- Fig. 6: zeigt einen Luftführungsbalg mit einem zylindrischen Zentralbalg mit seitlich angesetzten Balghälften eines Balges mit kleinerem Querschnitt als der des Zentralbalges;
- Fig. 7: zeigt eine Ansicht gemäß der Linie VII - VII aus Fig. 6

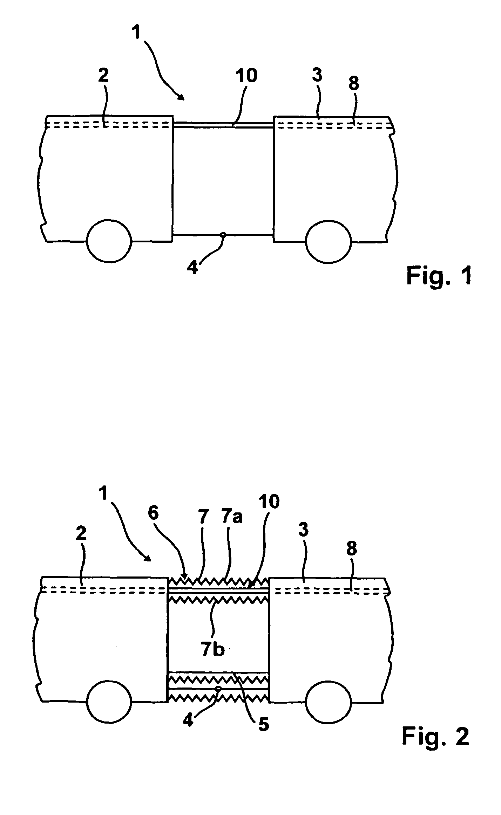

Bei der Darstellung gemäß den Figuren 1 und 2 ist ein Gelenkfahrzeug 1 dargestellt, das zwei Fahrzeuge 2 und 3 aufweist, die beispielsweise durch eine Kupplung 4 gelenkig miteinander verbunden sind. Im Bereich des Daches der Fahrzeuge ist eine Verrohrung 8 im Fahrzeug vorgesehen, um z. B. die in einem Fahrzeug von einer Klimaanlage erzeugte gekühlte Luft in das andere Fahrzeug durch den die beiden Fahrzeuge stirnseitig verbindenden Luftführungsbalg 10 zu transportieren.

Die Ausführungsform gemäß Fig. 2 unterscheidet sich von der Darstellung gemäß Fig. 1 ausschließlich darin, dass zwischen den beiden Fahrzeugen 2 und 3 ein Übergang 6 vorgesehen ist, der einen Doppelwellenbalg 7 und eine Übergangsbrücke oder Übergangsplattform 5 umfasst. Der Doppelwellenbalg 7 als Übergangsbalgeinrichtung weist zwei ineinander gelagerte Wellenbälge 7a, 7b auf, wobei im Dachbereich zwischen den beiden Wellenbälgen der Luftführungsbalg 10 zu finden ist. Ähnlich wie bei der Darstellung gemäß Fig. 1 verbindet der Luftführungsbalg 10 die in einem jeden Fahrzeug 2, 3 angeordnete Verrohrung 8, zur Führung beispielsweise von durch eine Klimaanlage gelieferter Frischluft. Der Übergang 6 umfasst darüber hinaus eine Übergangsbrücke 8, die von den beiden Bälgen 7a, 7b umgeben ist.

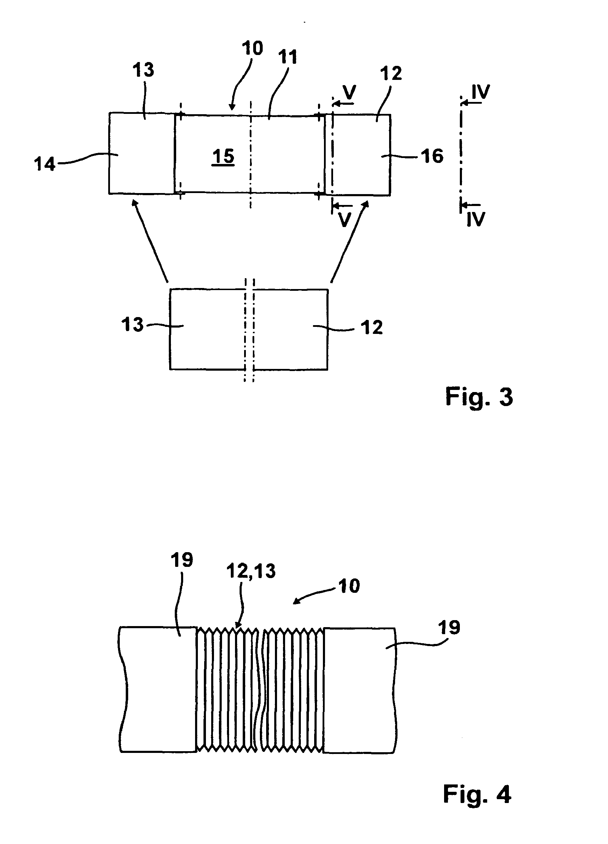

Gegenstand der Erfindung ist nunmehr der Luftführungsbalg 10. Der Luftführungsbalg 10 ist in den Figuren 3 bis 5 sowie 6 und 7 näher dargestellt. Aus der Darstellung gemäß der Fig. 3 ist der Aufbau des Luftführungsbalges 10 erkennbar. Der Luftführungsbalg 10 umfasst einen Zentralbalg 11, der als Faltenbalg im vorliegenden Fall rechteckig ausgebildet ist. Zu beiden Seiten des Zentralbalges 11 schließen sich ebenfalls als Faltenbälge ausgebildete Teilbälge 12 und 13 an, die aus einem parallel zur Mittellängsachse geteilten Zentralbalg hergestellt sind. Mit ihrem offenen Ende sind die beiden Teilbälge 12, 13 mit den entsprechenden Wänden des Zentralbalges 11 überlappend verbunden. Die Verbindung kann hierbei durch Vernähen, Verkleben und/oder Verschweißen erfolgen. In jedem Fall ist sicherzustellen, dass die Verbindung luftdicht ist.

Insofern weist der Luftführungsbalg drei Kammern 14, 15 und 16 auf, wobei durch die Kammern 14 und 16, beispielsweise warme Luft der Klimaanlage zugeführt werden kann und über die Kammer 15 gekühlte Luft den Fahrzeugen zugeführt wird.

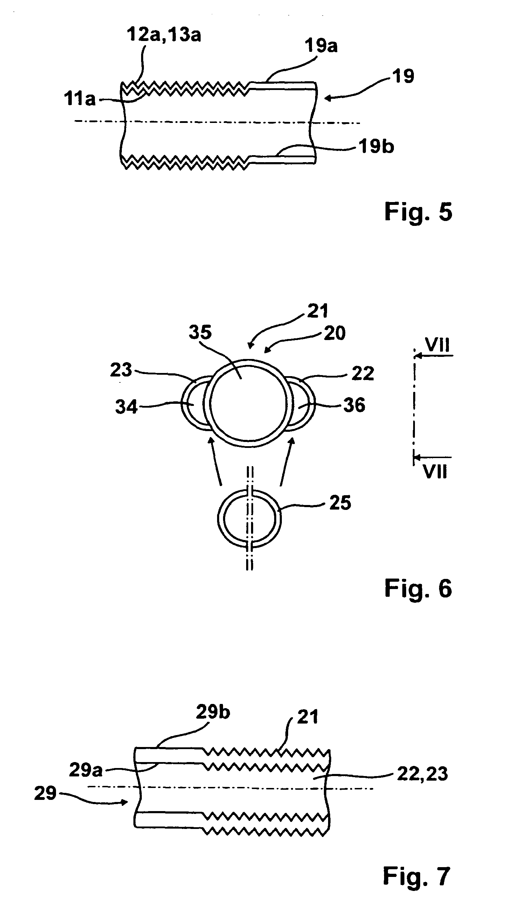

Betrachtet man nunmehr die Fig. 4, so erkennt man eine Seitenansicht des Luftführungsbalges 10. Der Luftführungsbalg 10 weist zu beiden Enden jeweils einen Anschlussstutzen 19 auf, wobei der Anschlussstutzen 19 zur Verbindung mit der Verrohrung 8 in dem jeweiligen Fahrzeug 2, 3 dient. Aus Fig. 5 ist erkennbar, wie der jeweilige Teilbalg 12, 13 mit dem Zentralbalg 11 verbunden ist. Hierbei liegt der Teilbalg 12, 13 überlappend auf dem Zentralbalg 11 im Randbereich auf. In diesem Bereich liegen die Falten des Teilbalges 12a, 13a auf den entsprechenden Falten 11a des Zentralbalges verzahnt auf. Auch zur Bildung des Anschlussstutzens 19 liegt der Anschlussstutzen 19a des jeweiligen Teilbalges auf dem Anschlussstutzen 19b des Zentralbalges auf.

Zusammenfassend ist nunmehr festzuhalten, dass die gefundene Konstruktion eine preiswerte Möglichkeit der Herstellung für Luftführungsbälge darstellt.

Fig. 6 zeigt eine Variante, bei der der Zentralbalg 21 des Luftführungsbalges 20 zylindrisch ausgebildet ist. Der Zentralbalg 21 ebenfalls als Faltenbalg weist zu beiden Seiten jeweils einen Teilbalg 22, 23 als Faltenbalg auf, der auf der Außenmantelfläche mit dem Zentralbalg 21, insbesondere verschweißt, vernäht und/oder verklebt ist. Die Teilbälge 22, 23 sind aus einem zylindrischen Balg 25 herstellbar, indem dieser mittig geteilt ist. Der zylindrische Balg 25 ist allerdings im Querschnitt unterschiedlich zu dem Zentralbalg 21 also größer oder kleiner, um zu ermöglichen, dass die Balghälften des Balges 25 beabstandet zum Zentralbalg 21 verlaufen, wie dies in der Fig. 6 dargestellt ist. Die Fig. 7 zeigt eine Seitenansicht gemäß Fig. 6, wobei auch hier erkennbar die Teilbälge 22, 23 im Querschnitt kleiner sind als der Zentralbalg 21. Infolgedessen ist der insgesamt mit 29 bezeichnete Anschlussstutzen aus zwei Anschlussstutzen 29a des Teilbalges gebildet, die als Kreisabschnitte an dem Anschlussstutzen 29b des Zentralbalges 21 anliegen. Die Verbindung kann auch hier durch Schweißen aber insbesondere auch durch Kleben erfolgen. Somit werden auch hier drei sich in Längsrichtung des Fahrzeugs erstreckende durchgehende Kammern 34, 35, 36 gebildet.

### Bezugszeichenliste:

- 1: Gelenkfahrzeug
- 2, 3: Fahrzeuge
- 4: Kupplung
- 5: Übergangsbrücke
- 6: Übergang
- 7: Doppelbalg
- 7a: äußerer Wellenbalg
- 7b: innerer Wellenbalg
- 8: Verrohrung auf Fahrzeug
- 10: Luftführungsbalg
- 11: Zentralbalg
- 11 a: Falten des Zentralbalges
- 12a, 12b: Falten des Teilbalges
- 12: Teilbalg
- 13: Teilbalg
- 13a: Falten des Teilbalges
- 14, 15, 16: Kammern
- 19: Anschlussstutzen
- 19a: Anschlussstutzen Teilbalg
- 19b: Anschlussstutzen Zentralbalg
- 20: Luftführungsbalg
- 21: Zentralbalg
- 22: Teilbalg
- 23: Teilbalg
- 25: zylindrischer Balg (zur Bildung der Teilbälge)
- 29: Anschlussstutzen
- 29a: Anschlussstutzen Teilbalg
- 29b: Anschlussstutzen Zentralbalg
- 34, 35 ,36: Kammern

## Patentansprüche

1. Mindestens ein zwei gelenkig miteinander verbundene Fahrzeuge (2, 3) umfassendes Gelenkfahrzeug (1), wobei zwei Fahrzeuge auf ihren einander zugewandten Stirnseiten durch mindestens einen Luftführungsbalg (10, 20) verbunden sind,
**dadurch gekennzeichnet,**
**dass** der Luftführungsbalg (10, 20) zur Bildung mindestens einer ersten Luftführungskammer (15, 35) mindestens einen sich parallel zur Längsachse erstreckenden Zentralbalg (11, 21) aufweist, wobei der Luftführungsbalg (10, 20) mindestens eine zweite Luftführungskammer (14, 16; 34, 36) aufweist, die als zu einer Seite offener Teilbalg (12, 13; 22, 23) ausgebildet ist, wobei der Teilbalg mit der offenen Seite über die Länge des Zentralbalges (11, 21) mit dem Zentralbalg (11,21) verbunden ist.

2. Gelenkfahrzeuge (1) nach Anspruch 1,
**dadurch gekennzeichnet,**
**dass** der Teilbalg (12, 13; 22, 23) durch ein parallel zur Längsachse getrennten Balg gebildet ist.

3. Gelenkfahrzeug (1) nach Anspruch 1 oder 2,
**dadurch gekennzeichnet,**
**dass** der Teilbalg (12, 13; 22, 23) durch einen parallel zur Längsachse getrennten Zentralbalg (11) gebildet ist.

4. Gelenkfahrzeug (1) nach einem der Ansprüche 1 bis 3,
**dadurch gekennzeichnet,**
**dass** der Zentralbalg (11) im Querschnitt viereckig, insbesondere rechteckig ausgebildet ist.

5. Gelenkfahrzeug (1) nach Anspruch 2,
**dadurch gekennzeichnet,**
**dass** der sich in Längsrichtung zwischen den beiden Fahrzeugen (2, 3) erstreckende Zentralbalg (21) im Querschnitt zylindrisch ausgebildet ist, wobei der Teilbalg (22, 23) durch Trennung eines im Querschnitt zylindrischen Balges (25) parallel zu seiner Längsachse gebildet ist, wobei der zylindrische Balg (25) zur Erstellung des Teilbalges (22, 23) einen unterschiedlichen Querschnitt zu dem sich zwischen den beiden Fahrzeugen erstreckenden Zentralbalg aufweist.

6. Gelenkfahrzeug (1) nach einem der voranstehenden Ansprüche,
**dadurch gekennzeichnet,**
**dass** der mindestens eine Teilbalg (12, 13; 22, 23) mit dem Zentralbalg (11, 21) verklebt, vernäht und/oder verschweißt ist.

7. Gelenkfahrzeug nach einem der voranstehenden Ansprüche,
**dadurch gekennzeichnet,**
**dass** der Zentralbalg (11, 21) und der Teilbalg (12, 13; 22, 23) jeweils als Faltenbalg ausgebildet sind.

8. Gelenkfahrzeug (1) nach Anspruch 7,
**dadurch gekennzeichnet,**
**dass** der mindestens eine Teilbalg (12, 13; 22, 23) mit dem Zentralbalg (11, 21) verzahnt verbunden ist.

9. Gelenkfahrzeug (1) nach einem der voranstehenden Ansprüche,
**dadurch gekennzeichnet,**
**dass** die beiden gelenkig miteinander verbundenen Fahrzeuge (2, 3) durch einen Übergang (6) mit mindestens einer Übergangsbalgeinrichtung verbunden sind, wobei der Luftführungsbalg (10, 20) durch die Übergangsbalgeinrichtung gehalten ist.

10. Gelenkfahrzeug (1) nach Anspruch 9,
**dadurch gekennzeichnet,**
**dass** die Übergangsbalgeinrichtung als Doppelbalg, insbesondere als Doppelwellenbalg (7) ausgebildet ist, wobei der Luftführungsbalg (10, 20) zwischen Innen- und Außenbalg des Doppelbalges geführt ist.

11. Gelenkfahrzeug (1) nach Anspruch 9 oder Anspruch 10,
**dadurch gekennzeichnet,**
**dass** die Übergangsbalgeinrichtung einen Übergangsbalg aufweist, wobei der Übergangsbalg beabstandet zum Balgdach eine Balgdecke aufweist, wobei der Luftführungsbalg (10, 20) zwischen Balgdecke und Balgdach verläuft.

12. Gelenkfahrzeug (1) nach einem der Ansprüche 9 bis 11,
**dadurch gekennzeichnet,**
**dass** der Luftführungsbalg (10, 20) mit der Übergangsbalgeinrichtung aufgehängt verbunden ist.

## Claims

1. At least one articulated vehicle (1) comprising two vehicles (2,3) articulately connected to each other, two vehicles being connected on their front sides that face each other by at least one air duct bellows (10, 20),
**characterized in that**
for forming at least one first air guiding chamber (15, 35), the air duct bellows (10, 20) has at least one central bellows (11, 21) extending parallel to the longitudinal axis, the air duct bellows (10, 20) having at least one second air guiding chamber (14, 16; 34, 36), which is configured as a partial bellows (12, 13; 22, 23) open on one side, the partial bellows being connected by the open side to the central bellows (11, 21) along the length of the central bellows (11, 21).

2. The articulated vehicle (1) according to claim 1,
**characterized in that**
the partial bellows (12, 13; 22, 23) is formed by a bellows divided parallel to the longitudinal axis.

3. The articulated vehicle (1) according to claim 1 or 2,
**characterized in that**
the partial bellows (12, 13; 22, 23) is formed by a central bellows (11) divided parallel to the longitudinal axis.

4. The articulated vehicle (1) according to one of the claims 1 to 3,
**characterized in that**
the cross-section of the central bellows (11) is configured to be quadrangular, more specifically rectangular.

5. The articulated vehicle (1) according to claim 2,
**characterized in that**
the cross-section of the central bellows (21) extending between the two vehicles (2, 3) in the longitudinal direction is configured cylindrically, the partial bellows (22, 23) being formed by dividing a bellows (25) with a cylindrical cross-section parallel to the longitudinal axis, wherein, for building the partial bellows (22, 24), the cylindrical bellows (25) has a different cross-section than the central bellows extending between the two vehicles.

6. The articulated vehicle (1) according to one of the afore-mentioned claims,
**characterized in that**
the at least one partial bellows (12, 13; 22, 23) is glued, sewn and/or welded to the central bellows (11, 21).

7. The articulated vehicle (1) according to one of the afore-mentioned claims,
**characterized in that**
the central bellows (11, 21) and the partial bellows (12, 13; 22, 23) are respectively configured as a folding bellows.

8. The articulated vehicle (1) according to claim 7,
**characterized in that**
the at least one partial bellows (12, 13; 22, 23) is interlocked with the central bellows (11, 21).

9. The articulated vehicle (1) according to one of the afore-mentioned claims,
**characterized in that**
the two vehicles (2, 3) articulately connected to each other are connected by way of a gangway (6) with at least one gangway bellows device, the air duct bellows (10, 20) being held by the gangway bellows device.

10. The articulated vehicle (1) according to claim 9,
**characterized in that**
the gangway bellows device is configured as a twin bellows, more specifically as a twin corrugated bellows (7), the air duct bellows (10, 20) being led between the inner and the outer bellows of the twin bellows.

11. The articulated vehicle (1) according to claim 9 or claim 10,
**characterized in that**
the gangway bellows device has a gangway bellows, the gangway bellows having a bellows ceiling at a distance from the bellows roof, the air duct bellows (10, 20) running between the bellows ceiling and the bellows roof.

12. The articulated vehicle (1) according to one of the claims 9 to 11,
**characterized in that**
the air duct bellows (10, 20) is connected in a suspended manner to the gangway bellows device.

## Revendications

1. Véhicule articulé (1) comportant au moins deux véhicules (2,3) couplés entre eux de façon articulée, dans lequel deux véhicules sont couplés entre eux au niveau de leur face frontale en regard, au moyen d'au moins un soufflet à conduit d'air (10, 20),
**caractérisé en ce que**
le soufflet à conduit d'air (10, 20) comporte au moins un soufflet central (11, 21) s'étendant parallèlement à l'axe longitudinal, pour constituer une première chambre de guidage d'air (15, 35), dans lequel le soufflet à conduit d'air (10, 20) comporte au moins une deuxième chambre de guidage de l'air (14, 16; 34, 36) qui est conformé comme un soufflet partiel (12, 13; 22, 23) ouvert sur un coté, dans lequel le soufflet partiel est lié au soufflet central (11, 21) par son coté ouvert, sur la longueur du soufflet central (11, 21).

2. Véhicule articulé (1) selon la revendication 1,
**caractérisé en ce que**
le soufflet partiel (12, 13 ; 22, 23) est constitué d'un soufflet séparé parallèle à l'axe longitudinal.

3. Véhicule articulé (1) selon les revendications 1 ou 2,
**caractérisé en ce que**
le soufflet partiel (12, 13 ; 22, 23) est formé d'un soufflet central séparé, parallèle à l'axe longitudinal.

4. Véhicule articulé (1) selon l'une quelconque des revendications 1 à 3,
**caractérisé en ce que**
le soufflet central (11) a une section transversale quadrangulaire, en particulier à angle droit.

5. Véhicule articulé (1) selon la revendication 2,
**caractérisé en ce que**
le soufflet central (21) qui s'étend dans le sens longitudinal entre les deux véhicules (2, 3) a une section transversale cylindrique, dans lequel le soufflet partiel (22, 23) est réalisé par la séparation le long d'une parallèle à l'axe longitudinal d'un soufflet de section transversale cylindrique (25), dans lequel le soufflet cylindrique (25), pour la réalisation du soufflet partiel (22, 23) présente une section différente de celle du soufflet central qui s'étend entre les deux véhicules.

6. Véhicule articulé (1) selon l'une quelconque des revendications précédentes,
**caractérisé en ce que**
ledit au moins un soufflet partiel (12, 13 ; 22, 23) est lié au soufflet central (11, 21) par collage, couture et/ou soudure.

7. Véhicule articulé (1) selon l'une quelconque des revendications précédentes,
**caractérisé en ce que**
le soufflet central (11, 21) et le soufflet partiel (12, 13 ; 22, 23) sont constitués par des soufflets à plis.

8. Véhicule articulé (1) selon la revendication 7,
**caractérisé en ce que**
ledit au moins un soufflet partiel (12, 13 ; 22, 23) est lié au soufflet central (11, 21) par une denture.

9. Véhicule articulé (1) selon l'une quelconque des revendications précédentes,
**caractérisé en ce que**
les deux véhicules articulés (2, 3) couplés entre eux sont liés par un passage (6) avec au moins un dispositif de soufflet d'interconnexion, dans lequel le soufflet de conduit d'air (10, 20) est tenu par le dispositif de soufflet d'interconnexion.

10. Véhicule articulé (1) selon la revendication 9,
**caractérisé en ce que**
l'installation de soufflet d'interconnexion est constitué d'un soufflet double, en particulier d'un soufflet à vagues double (7), dans lequel le soufflet de conduit d'air (10, 20) est disposé entre le soufflet intérieur et le soufflet extérieur du soufflet double.

11. Véhicule articulé (1) selon les revendications 9 ou 10,
**caractérisé en ce e que**
l'installation de soufflet d'interconnexion comporte un soufflet de passage, dans lequel le soufflet de passage est pourvu d'un plafond de soufflet en plus du toit de soufflet, dans lequel le soufflet de conduit d'air (10, 20) s'étend entre le plafond de soufflet et le toit de soufflet.

12. Véhicule articulé (1) selon l'une des revendications 9 à 11,
**caractérisé en ce que**
le soufflet de conduit d'air (10, 20) est suspendu à l'installation de soufflet d'interconnexion.
